# FASCICULE DE BREVET EUROPEEN

(11) **EP 2 663 449 B1**
(45) Date de publication et mention de la délivrance du brevet: **17.12.2014**
(21) Numéro de dépôt: 12702306.7
(22) Date de dépôt: 10.01.2012
(51) Int. Cl.: B29C 73/04, B29C 73/26, B64D 29/00

(54) **PROCÉDÉ DE RÉPARATION D'AU MOINS UNE PARTIE D'UN PANNEAU ACOUSTIQUE POUR UNE NACELLE**
VERFAHREN ZUR REPARATUR MINDESTENS EINES TEILS EINER AKUSTIKPLATTE FÜR EINE GONDEL
METHOD FOR REPAIRING AT LEAST A PORTION OF AN ACOUSTIC PANEL FOR A NACELLE

(30) Priorité: 13.01.2011 FR 1150284
(43) Date de publication de la demande: 20.11.2013
(73) Titulaire: Aircelle, 76700 Gonfreville L'Orcher (FR)
(72) Inventeur: MOUTIER, John, F-76620 Le Havre (FR); ANFRAY, Emmanuel, F-76290 Saint Martin du Manoir (FR); MAZE, Franck, F-76600 Le Havre (FR); SIMON, Hervé, F-76430 Sandouville (FR)
(74) Mandataire: Gaillarde, Frédéric F. Ch.
(86) Numéro de dépôt international: PCT/FR2012/050061
(87) Numéro de publication internationale: WO 2012/095602

(56) Documents cités:
- EP-A1- 1 870 228
- EP-A1- 2 108 504
- EP-A2- 1 985 538

## Description

La présente invention concerne un procédé de réparation d'au moins une partie d'un panneau acoustique pour une nacelle d'un turboréacteur d'un aéronef, ledit panneau comportant une peau acoustique percée d'une pluralité de trous acoustiques, une peau pleine et une structure acoustique comportant une pluralité de cellules alvéolaires présentant chacune un ou plusieurs orifices de drainage disposés dans une ou plusieurs parois formant chaque cellule alvéolaire, ladite structure étant disposée entre la peau acoustique et la peau pleine.

L'invention concerne également un panneau acoustique réparé par un tel procédé.

Un procédé de réparation d'un panneau acoustique pour une nacelle d'un turbiréacteur d'avion est décrit dans le document EP 1 871 228 A1.

Les turboréacteurs d'avion sont générateurs d'une pollution sonore importante. Il existe une forte demande visant à réduire cette pollution, et ce d'autant plus que les turboréacteurs utilisés deviennent de plus en plus puissants. La conception de la nacelle entourant un turboréacteur contribue pour une grande partie à la réduction de cette pollution sonore.

Afin d'améliorer d'avantage les performances acoustiques des aéronefs, les nacelles sont dotées de panneaux acoustiques visant à atténuer les bruits dus à la circulation des flux d'air à travers le turboréacteur ainsi qu'aux vibrations des structures de la nacelle.

Les panneaux acoustiques sont des structures de type sandwich bien connues pour absorber ces bruits. Ces panneaux comportent habituellement une structure acoustique alvéolaire pouvant être sous la forme d'une ou plusieurs couches alvéolaires superposées et comprenant chacune des cellules alvéolaires (structure couramment appelée « en nid d'abeille »). La structure acoustique alvéolaire est généralement revêtue sur la face dite externe, c'est-à-dire la plus éloignée radialement de l'axe du moteur, d'une peau imperméable à l'air, dite « pleine », et sur la face interne, c'est-à-dire la plus proche radialement de l'axe du moteur, d'une peau perforée perméable à l'air, dite « acoustique ».

Le panneau acoustique est ensuite assemblé en disposant puis en encollant les différentes peaux et la structure acoustique sur un moule à la forme requise. L'ensemble subit une cuisson dans un autoclave de manière à serrer les couches et à polymériser les adhésifs.

De tels panneaux constituent des résonnateurs acoustiques aptes à « piéger » le bruit et donc à atténuer les émissions sonores en direction de l'extérieur de la nacelle.

Cependant, de tels panneaux acoustiques peuvent être endommagés lors du fonctionnement de la nacelle, nécessitant la réparation voire le remplacement d'une ou de la totalité desdits panneaux.

Usuellement, les parties visibles et accessibles de la zone du panneau acoustique à réparer sont nettoyées avant de procéder à toute réparation. En effet, des particules polluantes issues de l'environnement du turboréacteur se déposent sur lesdites parties visibles et accessibles lors du fonctionnement du turboréacteur. La présence de telles particules est préjudiciable pour la pérénnité du future panneau réparé.

Or, il n'est pas possible d'assurer l'élimination de toutes les particules polluantes piégées dans les cellules alvéolaires. Il est ainsi nécessaire pour le réparateur d'effectuer la réparation sans transférer les potentielles particules polluantes vers la zone de réparation.

Il existe donc un besoin de réparer les panneaux acoustiques sans entraîner de particules polluantes dans la zone du panneau acoustique à réparer.

Un but de la présente invention est de fournir un procédé de réparation répondant à ce besoin qui soit efficace et simple à mettre en oeuvre.

A cet effet, selon un premier aspect, l'invention a pour objet un procédé de réparation d'au moins une partie d'un panneau acoustique pour une nacelle d'un turboréacteur d'un aéronef, ledit panneau comportant une peau acoustique percée d'une pluralité de trous acoustiques, une peau pleine et une structure acoustique alvéolaire comportant une pluralité de cellules alvéolaires présentant chacune un ou plusieurs orifices de drainage disposés dans une ou plusieurs parois formant chaque cellule alvéolaire, ladite structure étant disposée entre la peau acoustique et la peau pleine,
ledit procédé comportant les étapes où:
A- on délimite une partie du panneau acoustique à découper ;
B - on découpe ladite partie à l'exception de la peau acoustique;
C- on retire ladite partie découpée formant ainsi un découpage dans le panneau acoustique découpé formant une zone de découpage qui est fermée par la peau acoustique;
D - on injecte une résine durcissable à température ambiante au travers de trous acoustiques de la peau acoustique, lesdits trous aboutissant dans des cellules alvéolaires entières adjacentes à des cellules alvéolaires de jonction appartenant au panneau acoustique découpé de sorte à obstruer les orifices de drainage desdites cellules alvéolaires de jonction, lesdites cellules alvéolaires de jonction étant destinées à être en contact avec la zone de découpage ;
E - on dispose une structure acoustique alvéolaire de remplacement dans la zone de découpage et sur la peau acoustique, ladite structure acoustique de remplacement étant de dimension sensiblement égale à la zone de découpage ; et
F- on forme une peau pleine de remplacement sur la structure acoustique alvéolaire de remplacement.

On entend ici par « température ambiante » la température du lieu de réparation où est placé le panneau acoustique à réparer.

Le procédé de l'invention permet de manière avantageuse de bloquer la circulation d'air pendant la réparation du panneau acoustique entre la zone de réparation et la périphérie de cette dernière. Le procédé de l'invention permet donc de manière simple et efficace d'éviter l'entrainement de particules polluantes dans la zone du panneau acoustique à réparer ce qui assure une bonne cohésion du futur panneau réparé.

En outre, le procédé de l'invention n'augmente pas de manière avantageuse la masse du panneau acoustique ainsi réparé.

Le procédé de l'invention ne pénalise sensiblement pas les propriétés acoustiques dudit panneau acoustique. En effet, le nombre de cellules alvéolaires obstruées est négligeable par rapport au nombre de cellules alvéolaires totales.

Selon d'autres caractéristiques de l'invention, le procédé selon l'invention comporte l'une ou plusieurs des caractéristiques optionnelles suivantes considérées seules ou selon toutes les combinaisons possibles :
- dans l'étape D, la résine utilisée est choisie parmi les matériaux composant le panneau acoustique ou les matériaux thermoplastiques ;
- dans lequel, dans l'étape D, on injecte la résine au moyen d'un moyen d'injection, notamment d'un pistolet pneumatique ou d'une seringue, ce qui permet une injection simple et fiable ;
- dans lequel au cours de l'étape B, on découpe la partie de sorte que la zone de découpage soit délimitée par une ligne de découpage disposée à une distance comprise entre 2 mm et 3mm des sommets de chaque cellule alvéolaire de jonction les plus proches de la ligne de découpage, ce qui permet une ligne de découpage régulière et ainsi une injection de la résine maîtrisée pour l'utilisateur ;
- le procédé de l'invention comprend une étape supplémentaire G à l'issu de l'étape F dans laquelle on débouche les cellules alvéolaires entières adjacentes obstruées par la résine ce qui permet d'optimiser l'absorption acoustique du panneau acoustique ;
- au cours de l'étape G, on débouche lesdites cellules au moyen de d'un chauffage puis d'un moyen de dégagement ce qui permet de désobstruer de manière simple et fiable les cellules alvéolaires entières adjacentes ;
- au cours de l'étape F, on forme la peau pleine de remplacement par l'application de tissus préimprégnés ce qui permet d'obtenir de manière simple et fiable une peau pleine de remplacement ;
- la structure acoustique alvéolaire comporte une ou plusieurs couches alvéolaires sensiblement superposées et séparées ou non par un septum ce qui permet d'améliorer la l'absorption acoustique du panneau acoustique.

Selon un autre aspect, l'invention a pour objet un panneau acoustique réparé par le procédé de réparation selon l'invention.

L'invention sera davantage comprise à la lecture de la description non limitative qui va suivre, faite en référence aux figures ci-dessous annexées.
- la figure 1 est une coupe schématique partielle d'un mode de réalisation d'une nacelle de l'invention ;
- la figure 2 est une vue en perspective d'un panneau acoustique découpé selon un mode de réalisation du procédé de l'invention ;
- la figure 3 est une vue en perspective agrandie de la zone III de la figure 2 ;
- la figure 4 est une coupe transversale schématique d'une cellule pleine adjacente pendant l'injection de résine selon un mode de réalisation du procédé de l'invention ;
- la figure 5 est une coupe transversale schématique d'une cellule pleine adjacente après l'injection de résine selon le mode de réalisation du procédé de l'invention de la figure 4 ;
- la figure 6 est une vue de dessus du panneau acoustique découpé selon un mode de réalisation du procédé de l'invention.

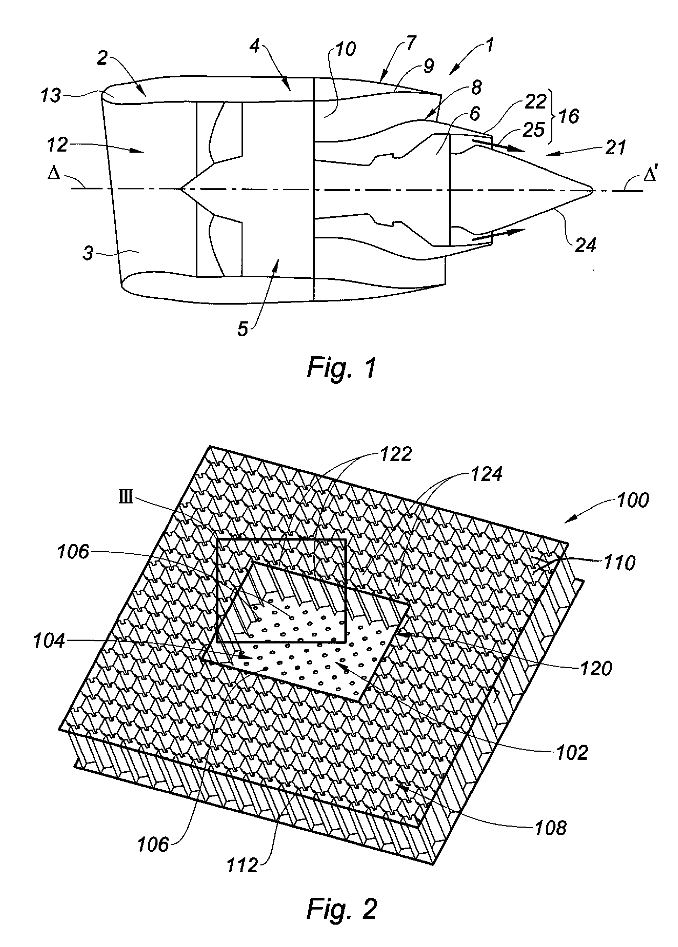

Comme représenté sur la figure 1, une nacelle 1 selon l'invention présente une forme sensiblement tubulaire selon un axe longitudinal Δ. La nacelle de l'invention 1 comprend une section amont 2 avec une lèvre d'entrée 13 d'air formant une entrée d'air 3, une section médiane 4 entourant une soufflante 5 d'un turboréacteur 6 et une section aval 7. La section aval 7 comprend une structure interne fixe 8 (IFS) entourant la partie amont du turboréacteur 6, une structure externe fixe (OFS) 9 et un capot mobile (non représenté) comportant des moyens d'inversion de poussée.

L'IFS 8 et l'OFS 9 délimite une veine annulaire 10 permettant le passage d'un flux d'air principal 12 pénétrant la nacelle 1 de l'invention au niveau de l'entrée d'air 3.

La nacelle de l'invention 1 comporte donc des parois délimitant un espace, telle que l'entrée d'air 3 ou la veine annulaire 10, dans lequel le flux d'air principal 12 pénètre, circule et est éjecté.

La nacelle 1 de l'invention se termine par une tuyère d'éjection 21 comprenant un module externe 22 et un module interne 24. Les modules interne 24 et externe 22 définissent un canal d'écoulement d'un flux d'air chaud 25 sortant du turboréacteur 6.

Chaque paroi au contact des flux d'air chaud 25 et froid 12 peuvent être formée d'un ou de plusieurs panneaux acoustiques.

Un panneau acoustique comporte typiquement une peau acoustique percée d'une pluralité de trous acoustiques, une peau pleine et au moins une couche de structure acoustique comportant une pluralité de cellules alvéolaires dont chacune comporte un ou plusieurs orifices de drainage dans une ou plusieurs parois formant une cellule alvéolaire. La structure acoustique peut donc être formée en totalité ou en partie d'une unique couche acoustique constituée de cellules alvéolaires. La structure acoustique peut être formée en totalité ou en partie d'une pluralité de couches acoustiques constituées de cellules alvéolaires séparées ou non par un septum.

La ou les couches de structure acoustique sont disposées entre la peau acoustique et la peau pleine.

Le procédé de l'invention permet de réparer un tel panneau acoustique.

Ledit procédé comporte les étapes où:
A- on délimite une partie du panneau acoustique à découper ;
B- on découpe ladite partie à l'exception de la peau acoustique;
C- on retire ladite partie découpée formant ainsi un découpage dans le panneau acoustique découpé formant une zone de découpage qui est fermée par la peau acoustique;
D- on injecte une résine durcissable à température ambiante au travers de trous acoustiques de la peau acoustique, lesdits trous aboutissant dans des cellules alvéolaires entières adjacentes à des cellules alvéolaires de jonction appartenant au panneau acoustique découpé de sorte à obstruer les orifices de drainage desdites cellules de jonction, lesdites cellules alvéolaires de jonction étant destinées à être en contact avec la zone de découpage et également les cellules alvéolaires périphériques appartenant à la partie de remplacement du panneau acoustique ;
E- on dispose une structure acoustique alvéolaire de remplacement dans la zone de découpage et sur la peau acoustique, ladite structure acoustique de remplacement étant de dimension sensiblement égale à la zone de découpage ; et
F- on forme une peau pleine de remplacement sur la structure acoustique alvéolaire de remplacement.

Le procédé de l'invention permet de manière avantageuse de bloquer la circulation d'air pendant la réparation du panneau acoustique entre la zone de réparation et la périphérie de cette dernière. Le procédé de l'invention permet donc de manière simple et efficace de supprimer la pollution de la zone de découpage par des particules issues notamment de l'environnement du turboréacteur 6 et qui sont présentes dans les cellules alvéolaires entières adjacentes à la zone de découpage. Une telle pollution est préjudiciable pour la cohésion du panneau acoustique ainsi réparé. En effet, grâce au procédé de l'invention, les orifices de drainages de cellules alvéolaires de jonction en contact avec la ligne de découpage ainsi que les cellules alvéolaires entières adjacentes sont obstrués. Par conséquent, les particules polluantes ne peuvent plus être véhiculées au travers de ces orifices ni par les cellules entières adjacentes. Tout se passe comme si une barrière de protection contre les particules polluantes du panneau acoustique est formée.

En outre, le procédé de l'invention n'augmente pas ou peu la masse du panneau acoustique réparé et ne pénalise pas ou très peu les propriétés acoustiques de ce dernier. En effet, le nombre de cellules alvéolaires obstruées est négligeable par rapport au nombre de cellules alvéolaires totales. De même la fonction d'absorption acoustique du panneau acoustique reste sensiblement identique à celle qu'elle était avant réparation.

Dans le procédé de l'invention, l'étape A où l'on délimite une partie du panneau acoustique à découper peut être réalisée par marquage sur la peau pleine, par exemple.

Ladite étape A peut être précédée par une étape de nettoyage du panneau acoustique, notamment des parties visibles et accessibles comme la peau pleine, au moyen d'un jet d'eau sous pression, par exemple.

L'étape B où l'on découpe ladite partie à l'exception de la peau acoustique est réalisée avec un moyen de découpage. A titre d'exemple de moyen de découpage, on peut citer un moyen d'une perceuse munie d'un disque de diamètre sensiblement égal à 30mm à lame diamantée.

Dans l'étape C, on retire ladite partie découpée formant ainsi la zone de découpage dans le panneau acoustique découpé, ladite zone de découpage étant fermée à une extrémité par la peau acoustique. On peut retirer manuellement ou de manière automatique ladite partie découpée.

A l'issu de l'étape C, une étape de nettoyage peut être réalisée. Ladite étape de nettoyage peut être réalisée par un solvant organique associé à un moyen non pelucheux pour essuyer ledit solvant et d'un chauffage sous étuve. De ce fait, les particules de poussières issues du découpage sont enlevées de la peau pleine et d'une partie des cellules alvéolaires. En outre, le panneau acoustique est avantageusement dégraissé. La présence de graisse pénaliserait la cohésion du panneau ainsi réparé.

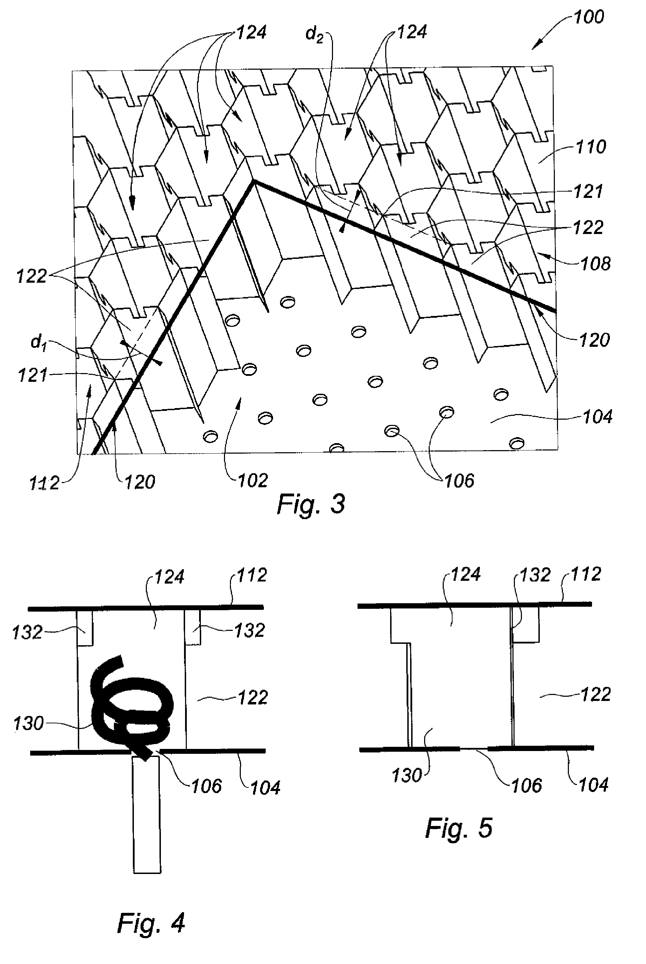

Les figures 2 et 3 illustrent un panneau 100 ainsi découpé. Ledit panneau 100 présente une zone de découpage 102 recouverte par la peau acoustique 104. La peau acoustique 104 comporte typiquement une pluralité de trous acoustiques 106 dont le diamètre est compris entre 1 mm et 2 mm.

La zone de découpage 102 est formée par la partie découpée du panneau acoustique, ladite partie pouvant présenter toute forme et toute dimension adaptées.

La structure acoustique alvéolaire 108 du panneau acoustique découpée comporte une pluralité de cellules alvéolaires 110. Dans le mode de réalisation de la figure 2, la structure acoustique alvéolaire 108 est constituée d'une unique couche alvéolaire elle-même constituée de cellules alvéolaires 110. Lesdites cellules alvéolaires 110 sont de forme hexagonale dans le mode de réalisation représenté aux figures 2 et 3. Lesdites cellules alvéolaires 110 peuvent être de toute autre forme adaptée à l'invention.

La structure acoustique alvéolaire 108 est recouverte d'une peau pleine 112 représenté en transparence pour les besoins de la figure 3.

La peau acoustique 104 et pleine 112 peuvent être réalisées par superposition de tissus préimprégnés cuits dans un autoclave ou à pression atmosphérique.

Préférentiellement, comme représenté sur la figure 3, au cours de l'étape B, on peut découper la partie de la peau pleine 112 et de la structure acoustique alvéolaire 108 à remplacer de sorte que la zone de découpage 102 comporte une ligne de découpage 120 disposée à une distance d₁ et d₂ comprise entre 2 mm et 3 mm des sommets 121 de cellules alvéolaires de jonction 122 les plus proches de ladite ligne de découpage 120. Ainsi, la ligne de découpage 120 est plus régulière. Ceci induit une injection de la résine 130 par l'utilisateur plus aisée pour l'utilisateur et gérée au juste besoin afin d'éviter tout excès de ladite résine 130.

Les cellules alvéolaires de jonction sont en contact à la fois à la ligne de découpage 120 et à des cellules alvéolaires entières adjacentes 124. Lesdites cellules alvéolaires de jonction 122 sont en outre destinées à être en contact avec les cellules alvéolaires périphériques appartenant à la partie de remplacement au niveau de la zone de découpage 102.

Comme représenté sur les figures 4 et 5, au cours de l'étape D, on injecte une résine durcissable 130 à température ambiante au travers de trous acoustiques 106 de la peau acoustique 104, lesdits trous 106 aboutissant dans les cellules alvéolaires entières adjacentes 124 de sorte à obstruer les orifices de drainage 132 des cellules de jonction 122 en contact avec les cellules alvéolaires adjacentes 124.

Typiquement, la température ambiante est comprise entre 15°C et 35°C.

Ainsi, comme représenté sur la figure 5, chaque cellule alvéolaire pleine adjacente 124 et les orifices de drainage 132 sont remplis par de la résine durcissable à température ambiante.

Par conséquent, il n'est pas nécessaire de prévoir un cycle de polymérisation supplémentaire pour la résine ce qui permet un gain de coût.

De plus, la polymérisation à température ambiante de la résine permet de manière avantageuse à l'utilisateur de s'assurer visuellement que les orifices de drainages 132 sont bien obturés avant d'engager les étapes de remplacement de la partie découpée. Le remplissage desdits orifices de drainage 132 permet d'éviter la circulation des particules polluantes vers la zone de découpage du panneau acoustique à réparer.

La résine utilisée peut être choisie parmi les matériaux composant le panneau acoustique ou les matériaux thermoplastiques. Dans le cadre de matériaux thermoplastiques, ces derniers peuvent être thermofusibles. L'utilisation d'un matériau thermoplastique permet de manière avantageuse d'être retirable du panneau acoustique après réparation.

La résine peut être injectée au moyen d'un moyen d'injection, notamment d'un pistolet pneumatique ou d'une seringue ce qui permet une intervention simple et fiable sur le panneau acoustique 100 partout où l'opérateur a un accès.

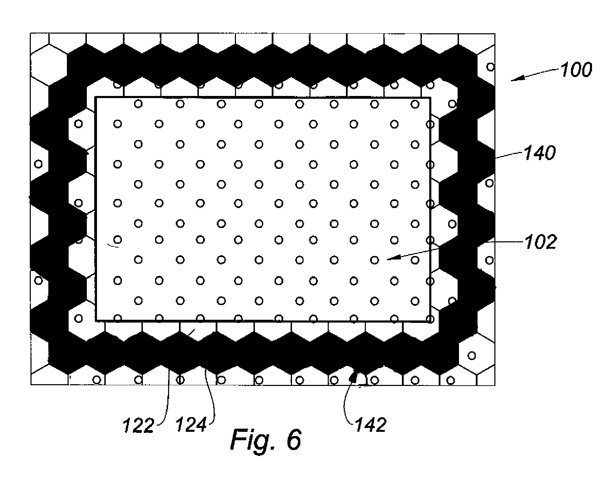

L'injection de la résine peut être réalisée dans des cellules alvéolaires entières adjacentes 124 disposées en quinconce 140 ou selon une ligne 142, comme indiqué sur la figure 6. La disposition en quinconce ou en ligne dépend de l'orientation des cellules alvéolaires entières adjacentes 124.

Dans l'étape E, on dispose sur la peau acoustique 104 une structure acoustique alvéolaire de remplacement dans la zone de découpage 102, ladite structure acoustique de remplacement étant de dimension sensiblement égale à celle du découpage.

Dans l'étape F, on forme une peau pleine de remplacement sur la structure acoustique alvéolaire de remplacement.

Au cours de l'étape F, on peut former la peau pleine de remplacement par l'application de tissus préimprégnés. Pour ce faire, la cohésion des tissus préimprégnés peut se faire dans un autoclave dans lequel est disposé le panneau réparé. Selon une variante, la cohésion des tissus préimprégnés se fait à pression atmosphérique.

Selon un mode de réalisation non représenté, le procédé de l'invention peut comprendre une étape supplémentaire G à l'issu de l'étape F dans laquelle on débouche les cellules alvéolaires de jonction 122 et les cellules alvéolaires entières adjacentes 124 obstruées par la résine 130. Ainsi, de manière avantageuse, on améliore l'absorption acoustique du panneau acoustique.

Au cours de l'étape G, on peut déboucher lesdites cellules alvéolaires 122 et 124 au moyen d'un chauffage puis d'un moyen de dégagement, notamment dans le cas d'une résine comprenant un matériau thermoplastique. A titre d'exemple, on peut chauffer à une température de chauffage comprise entre 190°C et la température maximale au-delà de laquelle le panneau acoustique est endommagé. A titre d'exemple de température de chauffage, on peut citer environ 220°C. Pour faire sortir la résine 130 ainsi rendue plus molle des cellules alvéolaires 124, la résine 130 est enlevée par le moyen de dégagement tel que des moyens d'aspiration. La résine 130 peut également être évacuée par un autre moyen adapté.

L'invention ne se limite pas aux modes de réalisation décrits et qui doivent être interprétés de façon non limitatives et englobant tous modes équivalents.

## Revendications

1. Procédé de réparation d'au moins une partie d'un panneau acoustique pour une nacelle (1) d'un turboréacteur (6) d'un aéronef, ledit panneau comportant une peau acoustique (104) percée d'une pluralité de trous acoustiques (106), une peau pleine (112) et une structure acoustique alvéolaire (108) comportant une pluralité de cellules alvéolaires (110) présentant chacune un ou plusieurs orifices de drainage (132) disposés dans une ou plusieurs parois formant chaque cellule alvéolaire (110), ladite structure (108) étant disposée entre la peau acoustique (104) et la peau pleine (112),
ledit procédé comportant les étapes où:
A - on délimite une partie du panneau acoustique à découper ;
B - on découpe ladite partie à l'exception de la peau acoustique (106);
C - on retire ladite partie découpée formant ainsi une zone de découpage (102) dans le panneau acoustique qui est fermée par la peau acoustique (104);
D - on injecte une résine (130) durcissable à température ambiante au travers de trous acoustiques (106) de la peau acoustique (104), lesdits trous (106) aboutissant dans des cellules alvéolaires entières adjacentes (124) à des cellules alvéolaires de jonction (122) appartenant au panneau acoustique découpé (100) de sorte à obstruer les orifices de drainage (132) desdites cellules alvéolaires de jonction (122), lesdites cellules alvéolaires de jonction (122) étant destinées à être en contact avec la zone de découpage (102);
E - on dispose une structure acoustique alvéolaire de remplacement dans la zone de découpage (102) et sur la peau acoustique (104), ladite structure acoustique de remplacement étant de dimension sensiblement égale à la zone de découpage (102) ; et
F - on forme une peau pleine de remplacement sur la structure acoustique alvéolaire de remplacement.

2. Procédé selon la revendication précédente, dans lequel, dans l'étape D, la résine (130) utilisée est choisie parmi les matériaux composant le panneau acoustique ou les matériaux thermoplastiques.

3. Procédé selon l'une quelconque des revendications précédentes, dans lequel, dans l'étape D, on injecte la résine (130) au moyen d'un moyen d'injection, notamment d'un pistolet pneumatique ou d'une seringue.

4. Procédé selon l'une quelconque des revendications précédentes, dans lequel au cours de l'étape B, on découpe la partie de sorte que la zone de découpage (102) soit délimitée par une ligne de découpage (120) disposée à une distance comprise entre 2 mm et 3mm des sommets (121) de chaque cellule alvéolaire de jonction (122) les plus proches de la ligne de découpage (120).

5. Procédé selon l'une quelconque des revendications précédentes, comprenant une étape supplémentaire G à l'issu de l'étape F dans laquelle on débouche les cellules alvéolaires entières adjacentes (124) obstruées par la résine (130).

6. Procédé selon la revendication précédente, dans lequel au cours de l'étape G, on débouche lesdites cellules (124) au moyen de d'un chauffage puis d'un moyen de dégagement.

7. Procédé selon l'une quelconque des revendications précédentes, dans lequel, au cours de l'étape F, on forme la peau pleine de remplacement par l'application de tissus préimprégnés.

8. Procédé selon l'une quelconque des revendications précédentes, dans lequel la structure acoustique alvéolaire (108) comporte une ou plusieurs couches alvéolaires sensiblement superposées et séparées ou non par un septum.

9. Panneau acoustique réparé par le procédé de réparation selon l'une quelconque des revendications précédentes.

## Patentansprüche

1. Verfahren zur Reparatur mindestens eines Teils einer akustischen Platte für eine Gondel (1) eines Turbinen-Luftstrahl-Treibwerks (6) eines Flugzeugs, wobei die Platte eine akustische Haut (104) umfasst, die von einer Vielzahl von akustischen Löchern (106) durchbohrt ist, eine volle Haut (112) und eine akustische Wabenstruktur (108), umfassend eine Vielzahl von Wabenzellen (110), die jeweils eine oder mehrere Drainageöffnungen (132) aufweisen, die in einer oder in mehreren Wänden angeordnet sind, die jeweils eine Wabenzelle (110) bilden, wobei die Struktur (108) zwischen der akustischen haut (104) und der vollen Haut (112) angeordnet ist,
wobei das Verfahren die Schritte umfasst, bei denen:
A - ein Teil der akustischen Platte, die geschnitten werden soll, eingegrenzt wird;
B - der Teil mit Ausnahme der akustischen Haut (106) geschnitten wird;
C - der geschnittene Teil entfernt wird, wodurch ein Ausschnittbereich (102) in der akustischen Platte gebildet wird, der von der akustischen Haut (104) geschlossen wird;
D - ein aushärtbares Harz (130) mit Raumtemperatur über akustische Löcher (106) der akustischen Haut (104) injiziert wird, wobei die Löcher (106) in ganzen Wabenzellen münden, die Verbindungs-Wabenzellen (122) benachbart (124) sind, die zur geschnittenen akustischen Beschichtung (100) gehören, um die Drainageöffnungen (132) der Verbindungs-Wabenzellen (122) zu verstopfen, wobei die Verbindungs-Wabenzellen (122) ausgelegt sind, um mit dem Ausschnittbereich (102) in Kontakt zu stehen;
E - eine akustische Ersatz-Wabenstruktur im Ausschnittbereich (102) und auf der akustischen Haut (104) angeordnet wird, wobei die akustische Ersatzstruktur eine Abmessung aufweist, die im Wesentlichen gleich dem Ausschnittbereich (102) ist; und
F - eine volle Ersatzhaut auf der akustischen Ersatz-Wabenbeschichtung gebildet wird.

2. Verfahren nach dem vorhergehenden Anspruch, wobei in Schritt D das verwendete Harz (130) ausgewählt ist aus den Materialien, die die akustische Platte bilden, oder den thermoplastischen Materialien.

3. Verfahren nach einem der vorhergehenden Ansprüche, wobei in Schritt D das Harz (130) mit Hilfe eines Injektionsmittels injiziert wird, insbesondere einer Druckluftpistole oder einer Spritze.

4. Verfahren nach einem der vorhergehenden Ansprüche, wobei im Laufe von Schritt B der Teil geschnitten wird, so dass der Ausschnittbereich (102) von einer Schnittlinie (120) begrenzt ist, die in einem Abstand zwischen 2 mm und 3 mm von den Scheiteln (121) jeder Verbindungs-Wabenzelle (122) angeordnet ist, die sich am nächsten an der Schnittlinie (120) befinden.

5. Verfahren nach einem der vorhergehenden Ansprüche, umfassend einen zusätzlichen Schritt G am Ende von Schritt F, in dem die benachbarten ganzen Wabenzellen (124), die vom Harz (130) verstopft sind, frei gemacht werden.

6. Verfahren nach dem vorhergehenden Anspruch, wobei im Laufe von Schritt G die Zellen (124) mit Hilfe einer Heizung, dann mit Hilfe eines Freigabemittels frei gemacht werden.

7. Verfahren nach einem der vorhergehenden Ansprüche, wobei im Laufe von Schritt F die volle Ersatzhaut durch die Anwendung von vorimprägnierten Geweben gebildet wird.

8. Verfahren nach einem der vorhergehenden Ansprüche, wobei die akustische Wabenstruktur (108) eine oder mehreren Wabenschichten umfasst, die im Wesentlichen aufeinander gelegt und durch eine Zwischenwand getrennt sind oder nicht.

9. Akustische Platte, repariert durch das Verfahren zur Reparatur nach einem der vorhergehenden Ansprüche.

## Claims

1. A method for repairing at least one portion of an acoustic panel for a nacelle (1) of a turbojet engine (6) of an aircraft, said panel including an acoustic skin (104) pierced with a plurality of acoustic holes (106), a solid skin (112) and an acoustic honeycomb structure (108) including a plurality of honeycomb cells (110) each presenting one or more drainage orifices (132) disposed in one or more wall(s) forming each honeycomb cell (110), said structure (108) being disposed between the acoustic skin (104) and the solid skin (112),
said method including the steps where:
A - a portion of the acoustic panel to be cut out is delimited;
B - said portion is cut out except for the acoustic skin (106);
C - said cutout portion is removed therefore forming a cutting area (102) in the acoustic panel which is sealed by the acoustic skin (104);
D - a resin (130) that is curable at room temperature is injected through acoustic holes (106) of the acoustic skin (104), said holes (106) terminating at adjacent honeycomb whole-cells (124) to junction honeycomb cells (122) belonging to the cutout acoustic panel (100) so as to obstruct the drainage orifices (132) of said junction honeycomb cells (122), said junction honeycomb cells (122) being intended to come into contact with the cutting area (102);
E - a replacement acoustic honeycomb structure is disposed in the cutting area (102) and on the acoustic skin (104), said replacement acoustic structure being of substantially equal dimension to the cutting area (102); and
F - a replacement solid skin is formed on the replacement acoustic honeycomb structure.

2. The method according to the preceding claim, wherein, instep D, the resin (130) used is selected from materials composing the acoustic panel or thermoplastic materials.

3. The method according to any one of the preceding claims, wherein, in step D, the resin (130) is injected by means of an injection means, in particular a pneumatic gun or a syringe.

4. The method according to any one of the preceding claims, wherein during the course of step B, the portion is cut out so that the cutting area (102) is delimited by a cutting line (120) disposed at a distance comprised between 2 mm and 3 mm of the peaks (121) of each junction honeycomb cell (122) that are closest to the cutting line (120).

5. The method according to any one of the preceding claims, comprising an additional step G following step F wherein adjacent honeycomb whole-cells (124) obstructed by the resin (130) are cleared.

6. The method according to the preceding claim, wherein during step G, said cells (124) are cleared by means of heating then of clearance.

7. The method according to any one of the preceding claims, wherein, during step F, the replacement solid skin is formed by the application of preimpregnated fabrics.

8. The method according to any one of the preceding claims, wherein the acoustic honeycomb structure (108) includes one or more honeycomb layer(s) substantially superimposed and separated or not separated by a septum.

9. An acoustic panel repaired by the repairing method according to any one of the preceding claims.
